# EUROPÄISCHE PATENTSCHRIFT

(11) **EP 3 666 692 B1**
(45) Veröffentlichungstag und Bekanntmachung des Hinweises auf die Patenterteilung: **02.08.2023**
(21) Anmeldenummer: 19204758.7
(22) Anmeldetag: 23.10.2019
(51) Int. Cl.: B65G 21/06

(54) **TRANSPORT- UND/ODER FÖRDERSTRECKE SOWIE VERFAHREN HIERFÜR**
TRANSPORT AND / OR CONVEYOR LINE AND METHOD FOR SAME
TRAJET DE TRANSPORT ET / OU D'ACHEMINEMENT AINSI QUE PROCÉDÉ ASSOCIÉ

(30) Priorität: 14.12.2018 DE 102018132312
(43) Veröffentlichungstag der Anmeldung: 17.06.2020
(73) Patentinhaber: Krones Aktiengesellschaft, 93073 Neutraubling (DE)
(72) Erfinder: LEHNER, Thomas, 93073 Neutraubling (DE); ROMAN, Christina, 93073 Neutraubling (DE)
(74) Vertreter: Benninger, Johannes

(56) Entgegenhaltungen:
- EP-A1- 2 893 836
- DE-U1- 20 309 215
- JP-A- 2003 306 219
- JP-A- 2010 047 404

## Beschreibung

Die vorliegende Erfindung betrifft eine Transport- und/oder Förderstrecke sowie ein Verfahren zum Aufstellen und/oder Abbau eines Transport- und/oder Förderstrecke mit den Merkmalen der unabhängigen Ansprüche.

In der Verpackungsindustrie werden Transport- und/oder Förderstrecken eingesetzt, damit Artikel, wie beispielsweise Flaschen, Kästen oder dergleichen von einer Verarbeitungsmaschine zur nächsten Verarbeitungsmaschine transportiert werden können. Die Transport- und/oder Förderstrecken umfassen meist Stützfüße, so dass die Transport- und/oder Förderstrecken jeweils auf einer definierten Höhe bzw. Ebene gehalten und/oder ausgerichtet werden können.

Um Platz beispielsweise bei der Lagerung und/oder beim Transport von derartigen Transport- und/oder Förderstrecken einsparen zu können, sind die Stützfüße üblicherweise zunächst demontiert. Die Montage der Stützfüße erfolgt in aller Regel erst beim Aufbau der Transport- und/oder Förderstrecke an ihrem definierten Platz bzw. Standort oder Einsatzort. Um grundsätzlich die Stützfüße an der Transport- und/oder Förderstrecke montieren zu können, muss die Transport- und/oder Förderstrecke zunächst auf einer Abstellvorrichtung aufgesetzt und/oder zwischengelagert werden. Mittels der Abstellvorrichtung wird die Transport- und/oder Förderstrecke zumindest näherungsweise auf einer Höhe gehalten werden, so dass die Stützfüße montiert werden können. Erst nach Montage der Stützfüße an die Transport- und/oder Förderstrecke kann die Abstellvorrichtung entfernt werden, da die Abstützung der Transport- und/oder Förderstrecke folglich über die Stützfüße erfolgt. In der Praxis hat sich die Verwendung einer Abstellvorrichtung dahingehend als nachteilig erwiesen, da hierdurch zur Montage der Stützfüße zusätzliche Verfahrensschritte und folglich auch mehr Zeit erforderlich ist/sind, bevor weitere Transport- und/oder Förderstrecken aufgebaut werden können.

Da darüber hinaus die Stützfüße und die Transport- und/oder Förderstrecke bei der Lagerung und/oder beim Transport getrennt voneinander aufbewahrt und/oder transportiert werden, müssen beim Aufbau der Transport- und/oder Förderstrecke zunächst die jeweils passenden Stützfüße zusammengesucht werden. Dabei besteht häufig die Gefahr, dass die Stützfüße verwechselt und folglich falsch montiert werden, so dass aufgrund dessen bspw. zuvor definierte Ausrichtungsgrade, wie beispielsweise Höhen oder dergleichen, der Transport- und/oder Förderstrecke nicht mehr eingehalten werden können.

Das Dokument JP 2003 306219 A offenbart eine Transport- und/oder Förderstrecke nach dem Oberbegriff des Anspruchs 1, und ein Verfahren nach dem Oberbegriff des Anspruchs 14. Das Dokument zeigt eine Fördervorrichtung, welche in kleinen Räumen gelagert werden soll. Die Fördereinrichtung umfasst z.B. einen horizontalen Förderkörper, der ein zu förderndes Objekt aufnimmt und in einer horizontalen Übergaberichtung befördert. Der Förderkörper umfasst Stützbeine, welche mit einem Befestigungsmittel am Förderkörper befestigt und gelöst werden können. Die Stützbeine sind an einem Beinbefestigungselement befestigt und weisen ein Drehverbindungselement auf, das über ein Scharnier schwenkbar am horizontalen Teil des Beinbefestigungselements befestigt ist.

Das Dokument JP 2010 047404 A_zeigt eine Fördervorrichtung für die Handsortierung von Abfällen. Die Fördervorrichtung weist einen Rollenträgerrahmen auf, an welchem mehrere Beine schwenkbar angeordnet sind. Das obere Ende des Beinteils ist über ein Scharnierelement mit dem Rollenträgerrahmen verbunden. Hierbei ist das Scharnierelement derartig ausgebildet, dass eine Platte des Scharniers auf der Seite des Beinteils und die andere Platte des Scharniers auf der Seite des Rollenstützrahmens befestigt ist, wobei die Platten um eine Drehwelle schwenkbar sind.

Das Dokument Dokumente DE 203 09 215 U1 zeigt einen Tisch mit einzeln umklappbaren Tischbeinen. Zwischen dem in Gebrauchsstellung oberen Ende des jeweiligen umklappbaren Tischbeins und der Tischplatte ist ein Beschlag angeordnet, an welchem das Tischbein arretierbar, umklappbar und in umgeklappter Position arretierbar ist. Ein mit dem Beschlag zusammenwirkendes Beschlagteil weist schräg verlaufende Anschlagflächen und Stirnflächen auf. Eine Achse umfasst eine Spannvorrichtung zum Zusammendrücken der an den schrägen Flächen zusammenliegenden Beschlagteile, wodurch die Gebrauchsstellungen des Tisches jeweils fixiert werden können.

Durch das Dokument EP 2 893 836 A1 wird ein Einrichtungselement mit einer zusammenklappbaren Stützstruktur gezeigt. Nach einer möglichen Ausführung kann ein erstes Gelenk Verriegelungs-/Entriegelungsmittel umfassen, um eine gewünschte Drehung der Ablagestruktur in Bezug auf das Stützbein und die Fixierung der Ablagestruktur in der vordefinierten Position zu ermöglichen. Vorzugsweise umfasst ein zweites Gelenk zweite Verriegelungs-/Entriegelungsmittel, um die gewünschte Drehung des Stützbeins in Bezug auf die Ablagestruktur und die Befestigung des Stützbeins in der vordefinierten Position zu ermöglichen.

Angesichts der im Stand der Technik bekannten Nachteile liegt der Erfindung daher die Aufgabe zugrunde, eine Transport- und/oder Förderstrecke zur Verfügung zu stellen, bei welcher eine Falschmontage der Stützfüße an der Transport- und/oder Förderstrecke weitgehend ausgeschlossen werden kann. Des Weiteren soll ein Verfahren zur Verfügung gestellt werden, mittels welchem die im Stand der Technik genannten Nachteile überwunden werden können.

Diese Aufgaben der Erfindung werden durch eine Förder- und/oder Transportstrecke sowie durch ein Verfahren mit den Merkmalen der unabhängigen Ansprüche 1 und 14 gelöst. Weitere vorteilhafte Ausgestaltungen und Weiterbildungen der Erfindung sind in den jeweils abhängigen Ansprüchen angegeben.

Die Erfindung betrifft eine Transport- und/oder Förderstrecke zum Fortbewegen von Artikeln von und/oder zu und/oder zwischen Verarbeitungsmaschinen, insbesondere Verpackungsmaschinen und/oder Abfüllmaschinen und/oder Palettieranlagen oder dergleichen.

Die Transport- und/oder Förderstrecke umfasst eine Förderfläche zum Transport von Artikeln und/oder von Gruppen von Artikeln. Bei den Artikeln kann es sich beispielsweise um Flaschen, Behälter, Gebinde, Umverpackungen, Kartons, Getränkekisten oder dergleichen handeln. Die Förderfläche kann vorzugsweise eine horizontale Ebene ausbilden. Insbesondere können die Artikel und/oder die Gruppen von Artikeln auf der Förderfläche kontinuierlich oder diskontinuierlich transportiert werden.

Die Transport- und/oder Förderstrecke umfasst zumindest zwei aus zumindest zwei Abschnitten gebildete Stützfüße, welche zum Tragen der Förderfläche ausgebildet sind. Mit Hilfe der Stützfüße kann die Transport- und/oder Förderstrecke auf einer definierten Position gehalten und/oder stabilisiert werden. Insbesondere kann die Transport- und/oder Förderstrecke auf einer definierten Höhe gehalten werden.

Die zumindest zwei Abschnitte können durch einen ersten Abschnitt und durch einen zweiten Abschnitt gebildet und/oder definiert sein.

Die zumindest zwei Abschnitte der jeweiligen Stützfüße sind mittels einer Verbindungseinheit gekoppelt, wobei die Verbindungseinheit jeweils zwei Verbindungselemente umfasst, wobei jeweils ein Verbindungselement einem Abschnitt der zumindest zwei Abschnitte zugeordnet ist.

Erfindungsgemäß ist vorgesehen, dass zumindest ein zweiter Abschnitt gegenüber dem ersten Abschnitt der zumindest zwei Abschnitte der jeweiligen Stützfüße zwischen zwei Endlagen verschwenkbar ausgebildet ist.

Die zwei oder mehr Stützfüße, die aus zumindest zwei Abschnitten gebildet sind, können vorzugsweise auf einer Unterseite und/oder am Rand der Transport- und/oder Förderstrecke angeordnet und/oder befestigt sein. Alternativ können die zumindest zwei Stützfüße über einen Zwischenrahmen an die Förderfläche montiert sein. Beispielsweise können die Stützfüße an einem Zwischenrahmen montiert und/oder befestigt sein, wobei dieser Zwischenrahmen wiederum an der Förderfläche montiert und/oder befestigt sein kann.

Weiter kann vorgesehen sein, dass die zumindest zwei Stützfüße jeweils spiegelbildlich, d.h. auf gleicher Ebene und/oder gleiche Höhe entlang der Transport- und/oder Förderstrecke angeordnet sind. Insofern können die zumindest zwei Stützfüße auch als Stützfußpaar bezeichnet werden.

Bei dem ersten Abschnitt der zumindest zwei Abschnitte kann es sich insbesondere um den oberen Bereich bzw. Abschnitt der jeweiligen Stützfüße handeln. Vorzugsweise kann der erste Abschnitt des jeweiligen Stützfußes, vorzugsweise der obere Bereich bzw. Abschnitt des jeweiligen Stützfußes gegenüber der Förderfläche unverschwenkbar ausgebildet sein, d.h. der erste Abschnitt des jeweiligen Stützfußes kann starr und/oder fest einer Unterseite der Förderfläche und/oder am Rand der Transport- und/oder Förderstrecke bzw. an der Förderfläche angeordnet und/oder befestigt sein.

Bei dem zumindest einen zweiten Abschnitt kann es sich insbesondere um den unteren Bereich bzw. Abschnitt der jeweiligen Stützfüße handeln. Dieser Bereich kann insbesondere zur Abstützung der Transport- und/oder Förderstrecke dienen. Zudem kann der zumindest eine zweite Abschnitt und gegenüber dem ersten Abschnitt der jeweiligen Stützfüße schwenkbeweglich ausgebildet sein.

Da der zweite Abschnitt gegenüber dem ersten Abschnitt verschwenkbar ausgebildet ist, können die zumindest zwei Stützfüße beim Transport der Transport- und/oder Förderstrecke an der Förderfläche montiert blieben: Da folglich die zumindest zwei Stützfüße bereits an der Förderfläche vormontiert ist, kann die Suche nach den jeweils richtigen Stützfüßen entfallen bzw. es kann keine Verwechselung der Stützfüße mehr erfolgen, wie es bisher üblich aus dem Stand der Technik bekannt war. Darüber hinaus kann durch die Vormontage der zumindest zwei Stützfüße die Montagezeit bzw. die Zeit zum Aufbau der Transport- und/oder Förderstrecke am jeweiligen Standort deutlich verkürzt und damit optimiert werden.

Aufgrund der Vormontage der zumindest zwei Stützfüße an der Förderfläche ergibt sich daraus auch der Vorteil, dass die zumindest zwei Stützfüße beim Transport oder dergleichen der Transport- und/oder Förderstrecke nicht mehr separat gesichert werden müssen, d.h. eine separate und/oder zusätzliche Ladungssicherung der zumindest zwei Stützfüße ist nicht mehr erforderlich. Vielmehr ist es ausreichend, wenn bei einem Transport oder dergleichen lediglich die Transport- und/oder Förderstrecke gesichert wird. Denn durch die Sicherung der Transport- und/oder Förderstrecke sind zugleich auch die an der Transport- und/oder Förderstrecke vormontierten Stützfüße automatisch mit gesichert. Dadurch können insbesondere auch Kosten und Zeit eingespart werden. Zudem ist in diesem Zusammenhang vorteilhaft zu erwähnen, dass die Stützfüße jeweils in eine Transportstellung gebracht werden können, so dass die Transport- und/oder Förderstrecke mit den daran vormontierten Stützfüßen platzsparend transportiert und/oder gelagert werden kann.

Darüber hinaus ist es bei der vorliegenden Transport- und/oder Förderstrecke möglich, dass Verpackungsmaterial eingespart werden kann. Da die zumindest zwei Stützfüße in eine Transportstellung bringbar sind und/oder an der Transport- und/oder Förderstrecke vormontiert sind, besteht für die Stützfüße ein geringeres Risiko, dass diese während des Transports oder dergleichen beschädigt werden. Insofern ist es bei der vorliegenden Transport- und/oder Förderstrecke nun nicht mehr erforderlich, dass die Stützfüße und/oder die einzelnen Stützfußabschnitte einzeln und/oder separat verpackt werden müssen.

Die zumindest zwei Abschnitte können jeweils einen quadratischen, rechteckigen oder runden Durchmesser aufweisen. Die zumindest zwei Abschnitte können durch einen Hohlkörper oder durch ein Vollprofil ausgebildet sein.

Darüber hinaus können die zumindest zwei Abschnitte der zumindest zwei Stützfüße jeweils identisch ausgebildet sein, d.h. die zumindest zwei Abschnitte können jeweils die gleichen Abmessungen aufweisen. Beispielsweise können die zumindest zwei Abschnitte der zumindest zwei Stützfüße jeweils von gleicher Länge bzw. gleich lang ausgebildet sein.

Alternativ können die zumindest zwei Abschnitte der zumindest zwei Stützfüße jeweils unterschiedlich ausgebildet sein, d.h. die zumindest zwei Abschnitte können jeweils unterschiedliche Abmessungen aufweisen. Beispielsweise können die zumindest zwei Abschnitte der zumindest zwei Stützfüße jeweils unterschiedlich lang ausgebildet sein.

So wäre es beispielsweise denkbar, dass der zweite Abschnitt der zumindest zwei Abschnitte länger ausgebildet ist, als der erste Abschnitt. Bei dieser Ausführungsform könnte folglich beim Transport und/oder bei der Verpackung einer solchen Transport- und/oder Förderstrecke mehr Platzvolumen gespart werden, da die Stützfüße in dieser Anordnung nicht so viel Platz in Anspruch nehmen.

Alternativ wäre es aber auch denkbar, dass der zweite Abschnitt im Vergleich zum ersten Abschnitt kürzer ausgebildet ist.

Insbesondere sei auch darauf zu verweisen, dass jeweils eine Länge des ersten Abschnitts der zumindest zwei Stützfüße unveränderbar und/oder fest vorgegeben ist. Vorzugsweise kann es sich jeweils bei den ersten Abschnitten der zumindest zwei Stützfüße um ein Einheitsbauteil handeln. Somit können bei allen Höhen und/oder Ausrichtungen der Förderfläche gegenüber dem Boden die ersten Abschnitte der zumindest zwei Stützfüße gleich lang ausgebildet sein.

Demgegenüber kann vorgesehen sein, dass jeweils der zweite Abschnitt der zumindest zwei Stützfüße längenverstellbar bzw. höhenverstellbar ausgebildet ist, so dass über den zweiten Abschnitt die Höhe bzw. die Lage der Förderfläche eingestellt werden kann.

Insbesondere kann es vorgesehen sein, dass in einer ersten Endlage der zweite Abschnitt gegenüber dem ersten Abschnitt des jeweiligen Stützfußes rechtwinkelig angeordnet ist. Insbesondere können die Achsen des zumindest einen ersten Abschnitts und des zweiten Abschnitts der Stützfüße senkrecht aufeinander stehen und/oder rechtwinkelig zueinander angeordnet sein. Bei dieser Position bzw. Lage des zweiten Abschnitts kann es sich beispielsweise um eine Transportposition der zumindest zwei Stützfüße handeln, welche platzsparend ist.

In einer zweiten Endlage können jeweils der erste Abschnitt und der zweite Abschnitt der zumindest zwei Stützfüße in einer Ebene liegen. Insbesondere können die Achsen des zumindest einen ersten Abschnitts und des zweiten Abschnitts in einer Ebene liegen. Bei dieser Position bzw. Lage des zweiten Abschnitts kann es sich beispielsweise um die Arbeitsposition bzw. Abstützposition der zumindest zwei Stützfüße handeln.

Erfindungsgemäß wird es vorgesehen, dass jeweils der zweite Abschnitt gegenüber dem ersten Abschnitt um circa 180° verschwenkbar ausgebildet ist. Aufgrund dieser Verschwenkbarkeit kann der zumindest eine zweite Abschnitt zwischen zwei Endlagen, insbesondere zwischen der ersten Endlage und der zweiten Endlage, bewegt und/oder verschwenkt werden.

Weiter kann vorgesehen sein, dass die Verbindungselemente den zumindest zwei Abschnitten jeweils ortsfest zugeordnet sind. Insbesondere können die zumindest zwei Verbindungselemente dem jeweiligen Abschnitt form-, stoff- und/oder kraftschlüssig zugeordnet sein.

Weiter kann vorgesehen sein, dass die zumindest zwei Verbindungselemente über zumindest ein Verbindungsmittel miteinander gekoppelt sind. Vorzugsweise können die zumindest zwei Verbindungselemente derart mittels zumindest einen Verbindungsmittels miteinander gekoppelt sein, dass der zweite Abschnitt gegenüber dem ersten Abschnitt verschwenkbar ausgebildet ist.

Bei dem zumindest einen Verbindungsmittel kann es sich beispielsweise um einen Zapfen, Schraube oder dergleichen handeln.

Insbesondere sei darauf zu verweisen, dass eine Achse des zumindest einen Verbindungsmittels insbesondere eine Dreh- und/oder Schwenkachse des zumindest einen zweiten Abschnitts gegenüber dem ersten Abschnitt ausbildet.

Weiter kann es vorgesehen sein, dass die zumindest zwei Verbindungselemente jeweils eine Aufnahme umfassen und/oder bereitstellen, in welche Aufnahmen jeweils das zumindest eine Verbindungsmittel zur Koppelung der zumindest zwei Verbindungselemente einsetzbar ist.

Die Aufnahmen der zumindest zwei Verbindungselemente können jeweils korrespondierend zum Querschnitt und/oder zum Durchmesser des zumindest einen Verbindungsmittels ausgebildet sein. Vorzugsweise können die Aufnahmen der zumindest zwei Verbindungselemente einen runden Querschnitt aufweisen.

Das zumindest eine Verbindungsmittel kann in seiner eingesetzten Position in die jeweiligen Aufnahmen lose eingesetzt und/oder mittels zumindest eines Befestigungsmittels gelockert oder festgesetzt und/oder fixiert werden. Bei dem zumindest einen Befestigungsmittel kann es sich beispielsweise um eine Mutter oder dergleichen handeln.

Sofern das zumindest eine Verbindungsmittel lose und/oder mittels des zumindest einen Befestigungsmittels locker befestigt in die jeweilige Aufnahme der zumindest zwei Verbindungsmittel eingesetzt ist, kann der zumindest eine zweite Abschnitt der zumindest zwei Abschnitte gegenüber dem ersten Abschnitt zwischen den zwei Endlagen verschwenkt werden.

Sofern das zumindest eine Verbindungsmittel mittels des zumindest einen Befestigungsmittels in den Aufnahmen der zumindest zwei Verbindungselemente festgesetzt und/oder fixiert ist, sind die zumindest zwei Abschnitte in der jeweiligen Position fixiert und/oder unverdrehbar ausgebildet.

Weiter kann es vorgesehen sein, dass die zumindest zwei Verbindungselemente jeweils Berührungs- und/oder Kontaktflächen aufweisen, welche zumindest weitgehend plan ausgebildet sind. Bei den Berührungs- und/oder Kontaktflächen kann es sich insbesondere um diejenigen Flächen der zumindest zwei Verbindungselemente handeln, welche zueinander zugewandt liegen und/oder zugewandt angeordnet sind.

Weiter kann es vorgesehen sein, dass die Berührungs- und/oder Kontaktflächen der zumindest zwei Verbindungselemente in beiden Endlagen des zweiten Abschnitts parallel zueinander angeordnet und/oder ausgerichtet sind.

Die zumindest zwei Verbindungselemente, insbesondere dessen Berührungs- und/oder Kontaktflächen, können in beiden Endlagen des zweiten Abschnitts über Koppel- und/oder Rastverbindungen miteinander in Oberflächenkontakt stehen und/oder formschlüssig verbunden sein.

Dabei kann insbesondere vorgesehen sein, dass in der Berührungs- und/oder Kontaktfläche des zumindest einen Verbindungselements insbesondere zumindest zwei Aussparungen vorgesehen und/oder angeordnet sind, in welche je nach Endlage des zweiten Abschnitts zumindest ein Koppel- und/oder Rastelement eingreifen kann, welches auf der Berührungs- und/oder Kontaktfläche des weiteren Verbindungselements vorgesehen und/oder angeordnet ist.

Gemäß dem Ausführungsbeispiel kann es sich bei dem zumindest einen Koppel- und/oder Rastelement beispielsweise um eine Noppe und/oder um eine sonstige Erhebung handeln. Alternativ kann es sich bei dem zumindest einen Koppel- und/oder Rastelement um einen Steg handeln.

Gemäß einer weiteren Ausführungsform können in der Berührungs- und/oder Kontaktfläche des zumindest einen Verbindungselements insbesondere zumindest zwei Aussparungen vorgesehen und/oder angeordnet sein, in welche jeweils zumindest zwei Koppel- und/oder Rastelemente eingreifen, welche auf der Berührungs- und/oder Kontaktfläche des weiteren Verbindungselements vorgesehen und/oder angeordnet sind. Bei den zumindest zwei Koppel- und/oder Rastelementen kann es sich insbesondere um ein erstes Koppel- und/oder Rastelement und um ein zweites Koppel- und/oder Rastelement handeln.

Gemäß dem weiteren Ausführungsbeispiel kann es sich bei den zumindest zwei Koppel- und/oder Rastelementen beispielsweise um Noppen und/oder um sonstige Erhebungen handeln. Alternativ kann es sich bei den zumindest zwei Koppel- und/oder Rastelementen um zumindest zwei Stege oder dergleichen handeln, welche zumindest zwei Stege parallel zueinander angeordnet sein können. Insbesondere kann es sich bei den zumindest zwei Stegen um einen ersten Steg und um einen zweiten Steg handeln.

Wahlweise kann/können der Steg/die Stege auch geschwungen oder kreisförmig oder dergleichen ausgebildet sein.

Je nach Ausführungsform des zumindest einen Koppel- und/oder Rastelements oder der zumindest zwei Koppel- und/oder Rastelemente können in der Berührungs- und/oder Kontaktfläche des weiteren Verbindungselementes korrespondierende Aussparungen vorgesehen sein. Diese Aussparungen können jeweils derart ausgebildet sein, dass das zumindest eine Koppel- und/oder Rastelement oder die zumindest zwei Koppel- und/oder Rastelemente von den korrespondierenden Aufnahmen vollständig aufgenommen werden können und dass die jeweiligen Berührungs- und/oder Kontaktflächen der zumindest zwei Verbindungselemente in Oberflächenkontakt stehen. Insbesondere kann es sich bei den korrespondierenden Aussparungen um eine erste Aussparung und um eine zweite Aussparung handeln.

Somit kann vorgesehen sein, dass die Berührungs- und/oder Kontaktfläche des weiteren Verbindungselements des zweiten Abschnitts zumindest ein Koppel- und/oder Rastelement oder zumindest zwei Koppel- und/oder Rastelemente umfasst, welche jeweils in korrespondierende Aussparungen der Berührungs- und/oder Kontaktfläche des zumindest einen Verbindungselements des ersten Abschnitts eingreifen.

Gemäß einer Ausführungsform der Erfindung kann vorgesehen sein, dass in einer ersten Endlage das zumindest eine Koppel- und/oder Rastelement der Berührungs- und/oder Kontaktfläche des weiteren Verbindungselements in eine erste Aussparung der Berührungs- und/oder Kontaktfläche des zumindest einen Verbindungselements eingreift.

Weiter kann vorgesehen sein, dass in einer zweiten Endlage das zumindest eine Koppel- und/oder Rastelement der Berührungs- und/oder Kontaktfläche des weiteren Verbindungselements in eine zweite Aussparung der Berührungs- und/oder Kontaktfläche des zumindest einen Verbindungselements eingreift.

Gemäß einer weiteren Ausführungsform der Erfindung_kann vorgesehen sein, dass in einer ersten Endlage das erste Koppel- und/oder Rastelement der Berührungs- und/oder Kontaktfläche des weiteren Verbindungselements in eine erste Aussparung der Berührungs- und/oder Kontaktfläche des zumindest einen Verbindungselements und das zweite Koppel- und/oder Rastelement der Berührungs- und/oder Kontaktfläche des weiteren Verbindungselements in eine zweite Aussparung der Berührungs- und/oder Kontaktfläche des zumindest einen Verbindungselements eingreifen.

Weiter kann vorgesehen sein, dass in einer zweiten Endlage das erste Koppel- und/oder Rastelement der Berührungs- und/oder Kontaktfläche des weiteren Verbindungselements in die zweite Aussparung der Berührungs- und/oder Kontaktfläche des zumindest einen Verbindungselements und das zweite Koppel- und/oder Rastelement der Berührungs- und/oder Kontaktfläche des weiteren Verbindungselements in die erste Aussparung der Berührungs- und/oder Kontaktfläche des zumindest einen Verbindungselements eingreifen.

Zudem kann es vorgesehen sein, dass die zumindest zwei Stützfüße über wenigstens zwei Verbindungsstreben miteinander koppelbar sind und/oder gekoppelt sind. Die zumindest zwei Verbindungsstreben können kreuzend zueinander angeordnet sein. Alternativ können die zumindest zwei Verbindungsstreben auch parallel zueinander angeordnet sein. Die zumindest zwei Verbindungsstreben können als erste Verbindungsstrebe und als zweite Verbindungsstrebe unterschieden werden.

Die zumindest zwei Verbindungsstreben können jeweils derart ausgebildet sein, dass jeweils ein Ende der zumindest zwei Verbindungsstreben jeweils an einem Stützfuß befestigt ist und um diese Befestigung bzw. um diese Befestigungspunkt verschwenkbar ausgebildet ist; während das andere Ende der zumindest zwei Verbindungsstreben jeweils am anderen Stützfuß befestigbar ist.

Insbesondere kann vorgehen sein, dass die zumindest zwei Stützfüße erst dann mittels der zumindest zwei Verbindungsstreben gekoppelt werden bzw. koppelbar sind, sofern sich jeweils der zweite Abschnitt der zumindest zwei Abschnitte in der zweiten Endlage befindet.

Die zumindest zwei Verbindungsstreben haben sich als vorteilhaft erwiesen, da dadurch ein Abstand zwischen den zumindest zwei Stützfüßen vorgegeben werden kann. Darüber hinaus kann ein unvorhergesehenes Einknicken und/oder Wegknicken zumindest eines Stützfußes verhindert und/oder entgegengewirkt werden, d.h. die zumindest zwei Stützfüße können somit mittels den zumindest zwei Verbindungsstreben stabilisiert werden.

Weiter kann jeweils dem zweiten Abschnitt der jeweiligen Stützfüße eine Plattform, insbesondere eine Bodenplattform, zugeordnet sein. Die Plattform kann einen kreisförmigen Querschnitt oder dergleichen ausbilden. Die Plattform kann zur Stabilisierung und für einen sicheren Stand der zumindest zwei Stützfüße in der zweiten Endlage dienen. Ein Querschnitt der Plattform kann beispielsweise zumindest näherungsweise gleich oder größer als der Querschnitt des zweiten Abschnitts ausgebildet sein.

Die Plattform, insbesondere die Bodenplattform, kann zumindest zwei Bohrungen umfassen, in welche Bohrungen weitere Verankerungsmittel zum Verankern der Stützfüße im Boden eingesetzt werden. Bei den Verankerungsmitteln kann es sich beispielsweise um Schrauben, Nieten, Bolzen oder dergleichen Verankerungsmitteln handeln.

Die Plattform kann jeweils einem freien Ende des zweiten Abschnitts form-, stoff- und/oder kraftschlüssig zugeordnet sein. Vorzugsweise kann die Plattform, insbesondere die Bodenplattform, mit dem jeweiligen freien Ende des zweiten Abschnitts verschweißt und/oder verschraubt sein.

Darüber hinaus kann die Plattform höhenverstellbar ausgebildet sein. Hierfür kann die Plattform eine teleskopartige Stütze umfassen, so dass die Förderfläche bei Bodenunebenheiten geringfügig in der Höhe verstellt und/oder eingestellt werden kann.

Die Erfindung betritt weiter ein Verfahren zum Transport und/oder zum Aufstellen einer Transport- und/oder Förderstrecke zum Fortbewegen von Artikeln von und/oder zu und/oder zwischen Verarbeitungsmaschinen, insbesondere Verpackungsmaschinen und/oder Abfüllmaschinen und/oder Palettieranlagen oder dergleichen Maschinen.

In einem ersten Schritt wird eine Förderfläche zum Transport von Artikeln und/oder Gruppen von Artikeln bereitgestellt.

Zudem werden in einem weiteren Schritt zumindest zwei aus zumindest zwei Abschnitten gebildete Stützfüße bereitgestellt, welche die Förderfläche tragen, wobei die zumindest zwei Abschnitte der jeweiligen Stützfüße mittels einer Verbindungseinheit gekoppelt sind, und wobei die Verbindungseinheit jeweils zwei Verbindungselemente umfasst, wobei jeweils ein Verbindungselement einem Abschnitt der zumindest zwei Abschnitte zugeordnet ist.

Dabei ist vorgesehen, dass ein zweiter Abschnitt der zumindest zwei Abschnitte gegenüber dem ersten Abschnitt zwischen zwei Endlagen verschwenkt wird; d.h. der erste Abschnitt kann der Förderfläche fest bzw. starr zugeordnet sein, während der zweite Abschnitt gegenüber dem ersten Abschnitt verschwenkt werden kann.

Erfindungsgemäß wird es vorgesehen, dass der zumindest zweite Abschnitt zum Erreichen einer der zwei Endlagen gegenüber dem ersten Abschnitt um circa 180° verschwenkt wird.

In einer ersten Endlage, bei welcher es sich um die Transportposition handelt, kann der zweite Abschnitt gegenüber dem ersten Abschnitt des jeweiligen Stützfußes rechtwinkelig angeordnet sein, d.h. der zumindest eine zweite Abschnitt kann gegenüber dem ersten Abschnitt eingeklappt werden.

Wenn der zweite Abschnitt gegenüber dem ersten Abschnitt um circa 180° verschwenkt wird, dann kann dieser in eine zweite Endlage überführt werden, bei welcher es sich um die die Arbeitsposition bzw. Abstützposition handelt. Der zumindest eine zweite Abschnitt kann gegenüber dem ersten Abschnitt derart verschwenkt werden, dass diese bzw. deren Achsen in einer Ebene liegen.

Insbesondere kann vorgesehen sein, dass die Transport- und/oder Förderstrecke gemäß einer der zuvor beschriebenen Ausführungsvarianten oder Abwandlungen ausgebildet ist.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt in einer perspektivischen Ansicht eine Ausführungsform der erfindungsgemäßen Förder- und/oder Transportstrecke.
Figur 2A zeigt in einer perspektivischen Ansicht eine Ausführungsform der Stützfüße in einer ersten Endlage.
Figur 2B zeigt in einer perspektivischen Ansicht die in Figur 2A gezeigten Stützfüße während des Überführens von einer ersten Endlage in eine zweite Endlage.
Figur 2C zeigt in einer perspektivischen Ansicht die in den Figuren 2A und 2B gezeigten Stützfüße in einer zweiten Endlage von vorne.
Figur 2D zeigt in einer perspektivischen Ansicht die in den Figuren 2A und 2B gezeigten Stützfüße in einer zweiten Endlage von hinten.
Figur 3A zeigt in einer schematischen Ansicht eine Ausführungsform der Verbindungseinheit, wobei sich der Stützfuß in einer ersten Endlage befindet.
Figur 3B zeigt in einer schematischen Ansicht die in Figur 3A gezeigte Ausführungsform der Verbindungseinheit, wobei sich der Stützfuß in einer zweiten Endlage befindet.
Figur 4A und Figur 4B zeigen in verschiedenen Explosionsdarstellungen die in den Figuren 3 gezeigte Ausführungsform der Verbindungseinheit, wobei sich die Stützfüße in einer zweiten Endlage befinden.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Transport- und/oder Förderstrecke ausgestaltet sein kann und stellen keine abschließende Begrenzung dar.

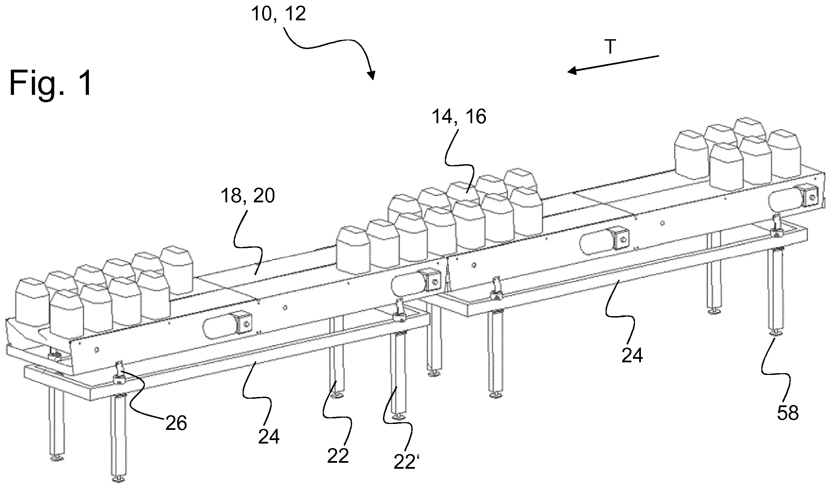

Die Figur 1 zeigt in einer perspektivischen Ansicht eine Ausführungsform der erfindungsgemäßen Transport- und/oder Förderstrecke 10, auf welcher bzw. entlang welcher Artikel 14 transportiert werden können. Gemäß vorliegender Ausführungsform handelt es sich bei den Artikeln 14 um Getränkebehälter, Flaschen 14 oder dergleichen. Die Ausführung der Artikeln 14 als Getränkebehälter oder Flaschen 14 soll nicht einschränkend zu verstehen sein. Denn grundsätzlich wäre es auch denkbar, Umverpackungen, Kartons, oder sonstige Gegenstände auf der Transport- und/oder Förderstrecke 10 zu transportieren und/oder Gruppen von Artikeln 14 zu transportieren.

Die in Figur 1 gezeigte Transport- und/oder Förderstrecke 10 dient dazu, Artikel 14 wie beispielsweise Getränkebehälter 16 zu und/oder von und/oder zwischen hier nicht dargestellten Verarbeitungsmaschinen zu transportieren. Beispielsweise können die Artikeln 14 mittels der Transport- und/oder Förderstrecke 10 zu einer hier nicht dargestellten Abfüllmaschine transportiert und/oder bewegt werden, in welcher die Artikeln 14, insbesondere die Getränkebehälter 16 mit einer bestimmten Flüssigkeit befüllt werden. Die bereits mit Flüssigkeit befüllten Artikel 14, insbesondere die Getränkebehälter 16, können anschließend mittels der in Figur 1 gezeigten Transport- und/oder Förderstrecke 10 zu einer hier ebenfalls nicht dargestellten Verpackungsmaschine transportiert und/oder bewegt werden. Die in Figur 1 gezeigte Transport- und/oder Förderstrecke 10 kann ebenfalls dazu dienen, die mittels der Verpackungsmaschine verpackten Artikel 14 zu einer hier nicht gezeigten Palettieranlage zu transportieren und/oder zu bewegen. Grundsätzlich wären auch beliebig weitere Einsatzbereiche der Transport- und/oder Förderstrecke 10 denkbar.

Die Transport- und/oder Förderstrecke 10 ist als Horizontalfördereinrichtung 12 ausgebildet und umfasst eine Förderfläche 18 zum insbesondere stehenden Transport von Artikeln 14, insbesondere von Getränkebehältern 16. Die Förderfläche 18 ist derart ausgebildet, dass die Artikeln 14 in zwei Reihen auf der Förderfläche 18 in Transportrichtung T transportiert und/oder bewegt werden.

Die Förderfläche 18 ist beispielsweise durch ein umlaufendes, endloses Förderband 20 ausgebildet. Das Förderband 20 wird insbesondere kontinuierlich durch eine hier nicht dargestellte Antriebseinheit angetrieben.

Damit die Transport- und/oder Förderstrecke 10 auf einer definierten Höhe und/oder Ebene gehalten und/oder ausgerichtet werden kann, umfasst die Transport- und/oder Förderstrecke 10 Stützfüße 22, 22', welche zum Tragen der Transport- und/oder Förderstrecke 10 ausgebildet sind. In der Figur 1 umfasst die Transport- und/oder Förderstrecke 10 acht Stützfüße, wobei jeweils zwei Stützfüße 22, 22' ein Stützfüßenpaar ausbilden.

Die Stützfüße 22, 22' sind der Förderfläche 18 jeweils über einen Zwischenrahmen 24 zugeordnet, d.h. die Stützfüße 22, 22' sind jeweils am Zwischenrahmen 24 befestigt. Insbesondere sind die Stützfüße 22, 22' jeweils an einer Unterseite des Zwischenrahmens 24 befestigt. Die Befestigung der Stützfüße 22, 22' kann jeweils form-, stoff- und/oder kraftschlüssig erfolgen. Beispielsweise können die Stützfüße 22, 22' an die Unterseite des Zwischenrahmens 24 verschweißt und/oder verschraubt oder dergleichen befestigt sein.

Der Zwischenrahmen 24 entspricht zumindest näherungsweise der Breite der Förderfläche 18 oder ist etwas breiter als die Förderfläche 18 ausgebildet.

Auf einer Oberseite des Zwischenrahmens 24 sind jeweils Abstützelemente 26 vorgesehen, auf welchen die Förderfläche 18 aufliegt, d.h. die Abstützelemente 26 sind an einer Unterseite und/oder an einem Rand der Förderfläche 18 befestigt.

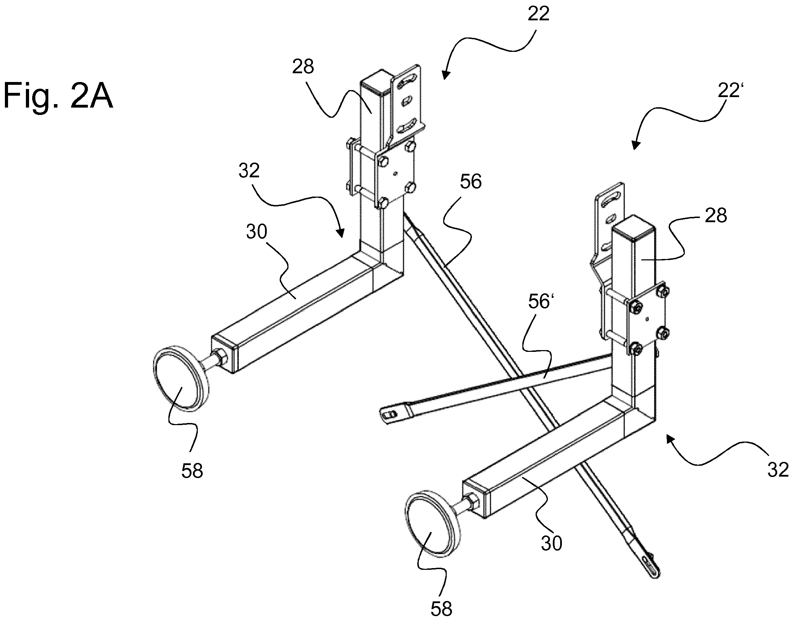

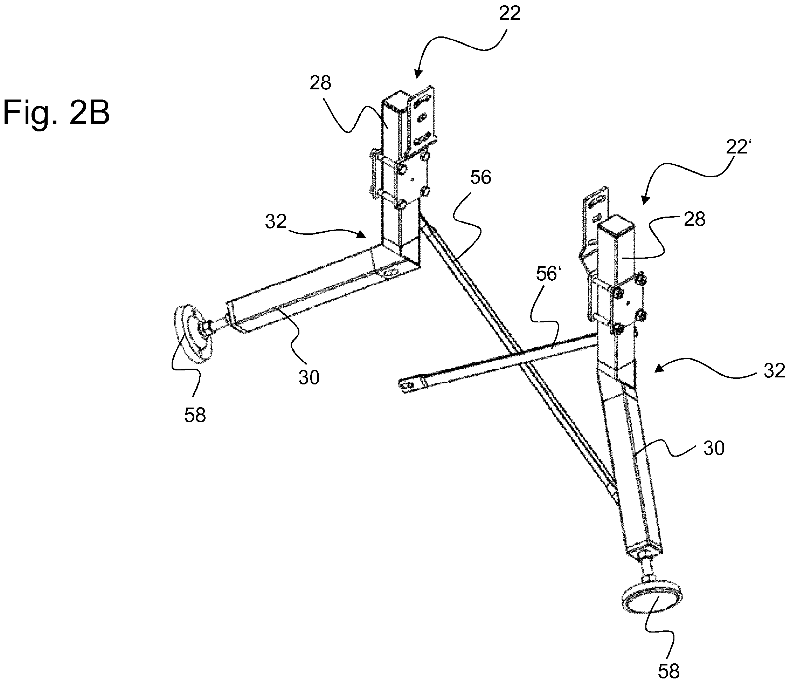

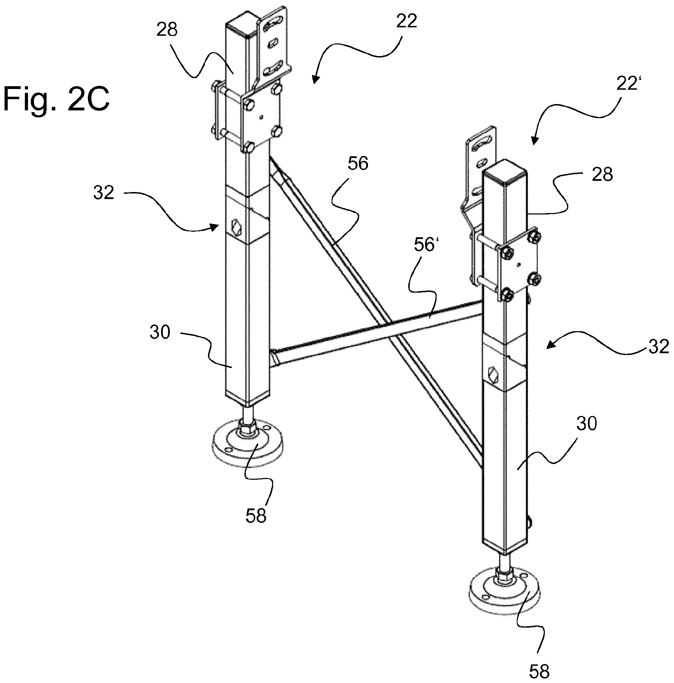

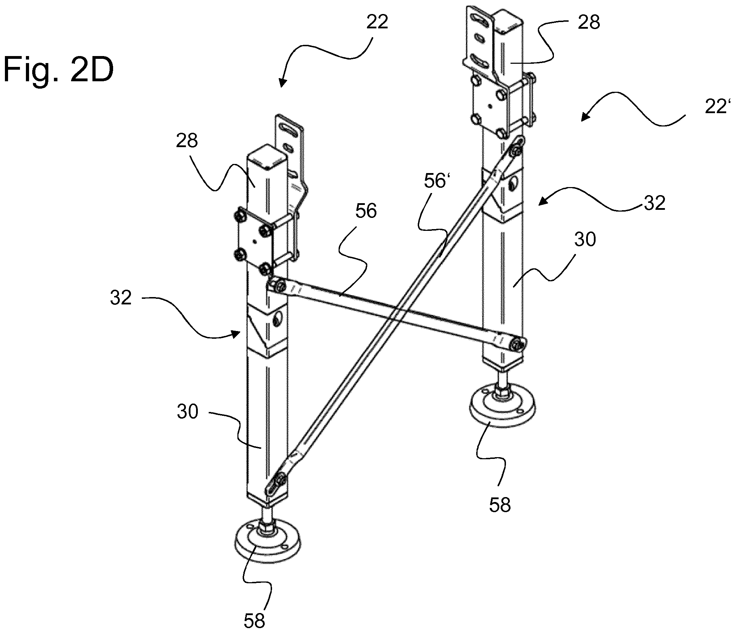

In den Figuren 2 sind in perspektivischen Ansichten jeweils zumindest zwei Stützfüße 22, 22' bzw. ein Stützfüßenpaar abgebildet, wobei in Figur 2A die Stützfüße 22, 22' in einer ersten Endlage, in Figur 2C und 2D die Stützfüße 22, 22' in einer zweiten Endlage und in Figur 2B die Stützfüße 22, 22' in einem Übergang zwischen der ersten Endlage und der zweiten Endlage abgebildet sind.

Aus den Figuren 2 wird insbesondere deutlich, dass die zumindest zwei Stützfüße 22, 22' jeweils aus zumindest zwei Abschnitten, insbesondere aus einem ersten Abschnitt 28 und aus einem zweiten Abschnitt 30, gebildet sind. Die zumindest zwei Abschnitte 28, 30 der zumindest zwei Stützfüße 22, 22' sind jeweils mittels einer Verbindungseinheit 32 gekoppelt.

Die zumindest zwei Stützfüße 22, 22', insbesondere deren Abschnitte 28, 30, weisen jeweils einen quadratischen Querschnitt auf und sind durch ein Hohlprofil gebildet. Da die zumindest zwei Stützfüße 22, 22' die Förderfläche 18 und damit eine insbesondere hohe Last zu tragen haben, sind die zumindest zwei Stützfüße 22, 22' jeweils aus einem metallischen Material wie beispielsweise aus Stahl und/oder aus Edelstahl und/oder aus einer metallischen Legierung gebildet.

Die Verbindungseinheit 32 umfasst jeweils zwei Verbindungselemente 34, 34', wobei jeweils ein Verbindungselement 34, 34' einem Abschnitt der zumindest zwei Abschnitte 28, 30 zugeordnet ist. Insbesondere ist ein Verbindungselement 34 der zwei Verbindungselemente 34, 34' einem freien Ende des ersten Abschnitts 28 zugeordnet, während das weitere Verbindungselement 34' einem freien Ende des zweiten Abschnitts 30 der Stützfüße 22, 22' zugeordnet ist.

Die Verbindungselemente 34, 34' umfassen jeweils eine Aufnahme, in welche jeweils das freie Ende des jeweiligen Abschnitts 28, 30 eines Stützfußes 22, 22' aufgenommen werden kann, d.h. die Aufnahme des zumindest einen Verbindungselements 34 kann das freie Ende des ersten Abschnitts 28 aufnehmen und die Aufnahme des weiteren Verbindungselements 34' kann das freie Ende des zweiten Abschnitts 30 der jeweiligen Stützfüße 22, 22' aufnehmen.

Die jeweiligen Abschnitte 28, 30 können mit den Verbindungselementen 34, 34' jeweils form-, stoff- und/oder kraftschlüssig verbunden sein. Beispielsweise können die zumindest zwei Abschnitte 28, 30 jeweils in die Verbindungselemente 34, 34', insbesondere in dessen Aufnahmen, rastend und/oder klemmend eingesteckt und/oder eingesetzt werden. Auch eine Verschweißung der jeweiligen Abschnitte 28, 30 mit den Verbindungselementen 34, 34' wäre denkbar.

Bei dem zumindest einen zweiten Abschnitt 30 handelt es sich insbesondere um den unteren Abschnitt bzw. Bereich des Stützfußes 22 handeln, während es sich bei dem ersten Abschnitt 28 um den oberen Abschnitt bzw. Bereich des Stützfußes 22, 22' handelt, welcher am Zwischenrahmen 24 befestigt ist.

Aufgrund der Verbindungseinheit 32 ist folglich der zweite Abschnitt 30 gegenüber dem ersten Abschnitt 28 zwischen zwei Endlagen verschwenkbar ausgebildet, während der erste Abschnitt 28 unverschwenkbar und/oder unbeweglich am Zwischenrahmen 24 befestigt ist.

Wie bereits erwähnt, ist der zweite Abschnitt 30 zwischen zwei Endlagen verschwenkbar ausgebildet. Die erste Endlage des zweiten Abschnitts 30 gegenüber dem ersten Abschnitt 28 geht insbesondere aus der Figur 2A hervor. In einer ersten Endlage ist der zweite Abschnitt 30 gegenüber dem ersten Abschnitt 28 rechtwinkelig angeordnet. Insbesondere sind jeweils die Achsen der zumindest zwei Abschnitte 28, 30 rechtwinkelig zueinander angeordnet.

Bei der ersten Endlage handelt es sich um eine Transportposition, welche in der Regel für den Transport der Transport- und/oder Förderstrecke 10 erforderlich ist. Denn in dieser Position kann jeweils der zweite Abschnitt 30 der zumindest zwei Stützfüße 22, 22' gegenüber dem ersten Abschnitt 28 weggeklappt und/oder verschwenkt werden; d.h. dieser kann beispielsweise während des Transportes der Transport- und/oder Förderstrecke 10 in eine platzsparende Position gebracht werden. Aufgrund dessen ist es möglich, dass jeweils die Stützfüße 22, 22' am Zwischenrahmen 24 und damit an der Förderfläche 18 befestigt bleiben können, d.h. die Stützfüße 22, 22' sind jeweils am Zwischenrahmen 24 vormontiert, wodurch sich die Montagezeit bzw. die Zeit zum Aufbau der Transport- und/oder Förderstrecke 10 am jeweiligen gewünschten Standort deutlich verkürzen lässt.

In den Figuren 2C und 2D ist die zweite Endlage des zweiten Abschnitts 30 dargestellt, wobei jeweils die zumindest zwei Abschnitte 28, 30 in einer Ebene liegen. Insbesondere liegen jeweils die Achsen der zumindest zwei Abschnitte 28, 30 in einer Ebene. Bei der zweiten Endlage handelt es sich insbesondere um die Arbeitsposition bzw. Abstützposition, in welcher die Stützfüße 22, 22' jeweils ihre Funktion zum Tragen der Förderfläche 18 vollständig ausführen können.

Da die zumindest zwei Stützfüße 22, 22' bereits an der Förderfläche 18 vormontiert sind, muss der zweite Abschnitt 30 der zumindest zwei Stützfüße 22, 22' lediglich von der ersten Endlage in die zweite Endlage (vgl. Figur 2B) verschwenkt werden. Der Aufbau einer solchen Transport- und/oder Förderstrecke 10 kann somit schnell und großen Zeitaufwand erfolgen.

In der Figur 2B ist ein Übergang des zweiten Abschnitts 30 von der ersten Endlage in die zweite Endlage dargestellt. Aus dieser Figur wird deutlich, dass der zweite Abschnitt 30 gegenüber dem ersten Abschnitt 28 um circa 180° verschwenkbar ist bzw. verschwenkt werden kann.

Wie es auch aus den Figuren 2 hervorgeht, sind den zumindest zwei Stützfüßen 22, 22' bzw. dem Stützfüßenpaar wenigstens zwei Verbindungsstreben, insbesondere eine erste Verbindungsstrebe 56 und eine zweite Verbindungsstrebe 56' zugeordnet. Über die wenigstens zwei Verbindungsstreben 56, 56' können die zumindest zwei Stützfüße 22, 22' zusätzlich gekoppelt werden.

Die wenigstens zwei Verbindungsstreben 56, 56' sind derart ausgebildet, dass jeweils ein Ende der ersten Verbindungsstrebe 56 dem einen Stützfuß 22 und ein Ende der zweiten Verbindungsstrebe 56' dem anderen Stützfuß 22' fest zugeordnet ist. Insbesondere sind die wenigstens zwei Verbindungsstreben 56, 56' jeweils im oberen Bereich, insbesondere im Bereich des ersten Abschnitts 28, des jeweiligen Stützfußes 22, 22' angeordnet.

Das jeweils andere bzw. freie Ende der wenigstens zwei Verbindungstreben 56, 56' wird jeweils an dem anderen Stützfuß befestigt. Insbesondere wird das jeweils andere bzw. freie Ende der wenigstens zwei Verbindungstreben 56, 56' jeweils im unteren Bereich bzw. am zweiten Abschnitt 30 des jeweiligen anderen Stützfußes 22, 22' befestigt.

Das Befestigung des jeweils anderen bzw. freien Endes der wenigstens zwei Verbindungsstreben 56, 56' erfolgt nur dann, wenn sich der zweite Abschnitt 30 in der zweiten Endlage befindet, wie es bspw. aus den Figur 2C und 2D hervorgeht. In diesem Fall dienen die wenigstens zwei Verbindungsstreben 56, 56' zur Stabilisierung der zumindest zwei Stützfüße 22, 22' und verhindern bspw. auch ein Wegknicken und/oder Abknicken der zumindest zwei Stützfüße 22, 22', insbesondere des zweiten Abschnitts 30. Die wenigstens zwei Verbindungsstreben 56, 56' werden derart an den zumindest zwei Stützfüßen 22, 22' befestigt, so dass diese sich kreuzen bzw. kreuzend zueinander angeordnet sind.

Sofern sich der zweite Abschnitt 30 in der ersten Endlage gemäß Figur 2A und/oder beim Übergang bzw. beim Verschwenken zwischen der ersten Endlage und der zweiten Endlage befindet, ist das jeweils freie Ende der Verbindungsstreben 56, 56' lose und/oder freihängend ausgebildet.

Besonders deutlich wird, dass die zumindest zwei Abschnitte 28, 30 unterschiedlich lang ausgebildet sind. Insbesondere ist der zweite Abschnitt 30 der jeweiligen Stützfüße 22, 22' deutlich länger als dessen erster Abschnitt 28 ausgebildet. Dies ist deshalb vorteilhaft, da somit die Stützfüße 22, 22' in der ersten Endlage und damit in der Transportposition platzsparend angeordnet sind.

Damit die zumindest zwei Stützfüße 22, 22' jeweils einen sicheren Stand zur Abstützung der Förderfläche 18 auf dem Boden haben, ist diesen jeweils eine Bodenplattform 58 zugeordnet. Die Bodenplattform 58 ist dem freien Ende des zweiten Abschnitts 30 des jeweiligen Stützfußes 22, 22' zugeordnet, wobei die Bodenplattform 58 insbesondere am freien Ende des zweiten Abschnitts 30 des jeweiligen Stützfußes 22, 22' form-, stoff- und/oder kraftschlüssig befestigt sein kann.

Die Bodenplattform 58 weist jeweils einen kreisförmigen Querschnitt auf, welcher vorzugsweise größer als der Querschnitt des zweiten Abschnitts 30 ausgebildet ist. Dadurch lässt sich eine bessere Stabilität zur Abstützung der Förderfläche 18 erreichen.

Zur zusätzlichen Verankerung der Bodenplattformen 58 weist diese zusätzliche hier nicht dargestellte Bohrungen auf. In die Bohrungen sind Verankerungsmittel wie bspw. Schrauben oder dergleichen einsetzbar, welche in den Boden eingreifen. Alternativ oder zusätzlich können die Bodenplattformen 58 an den Boden verschweißt werden.

Um die Lage und/oder Höhe der Förderfläche 18 bspw. bei Bodenunebenheiten ausrichten und/oder ausgleichen zu können, sind die Bodenplattformen 58 höhenverstellbar ausgebildet.

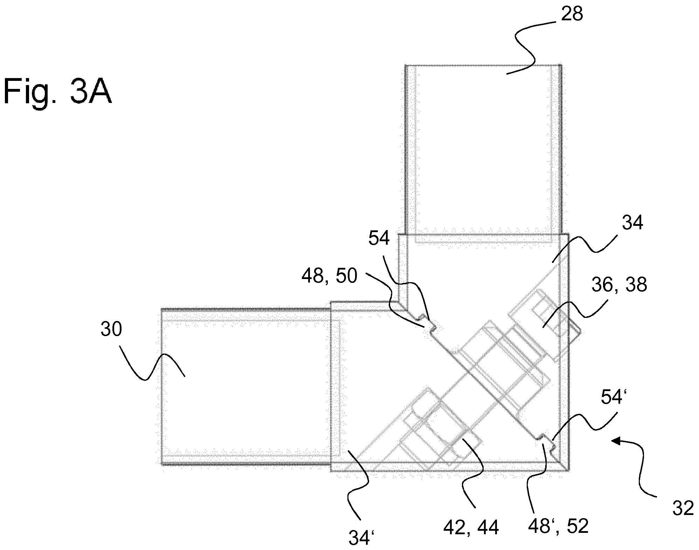

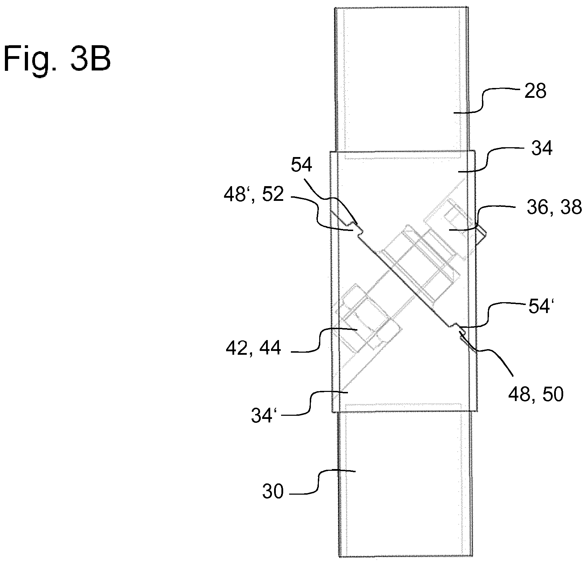

In den Figuren 3 ist jeweils in einer schematischen Detailansicht die Verbindungseinheit 32, insbesondere dessen an den zumindest zwei Abschnitten 28, 30 zugeordneten Verbindungselementen 34, 34' abgebildet. Insbesondere ist in der Figur 3A der Stützfuß 22 in der ersten Endlage, d.h. in der Transportposition abgebildet, während in der Figur 3B der Stützfuß 22 in der zweiten Endlage, d.h. in der Arbeits- bzw. Abstützposition abgebildet ist.

Aus den entsprechenden Figuren wird deutlich, dass die zumindest zwei Verbindungselemente 34, 34' über zumindest ein Verbindungsmittel 36 miteinander gekoppelt sind. Das zumindest eine Verbindungsmittel 36 ist durch einen Zapfen 38 ausgebildet.

Die zumindest zwei Verbindungselemente 34, 34' weisen jeweils eine Aufnahme 40, 40' auf, in welche jeweils das zumindest eine Verbindungsmittel 36 bspw. in Form des Zapfens 38 eingesetzt werden kann. Die Aufnahmen 40, 40' sind dabei korrespondierend zum Querschnitt des zumindest einen Verbindungsmittels 36 ausgebildet.

Das zumindest eine Verbindungsmittel 36 bzw. der Zapfen 38 ist zunächst lose in die jeweiligen Aufnahmen 40, 40' der zumindest zwei Verbindungselemente 34, 34' einsetzbar und/oder eingesetzt. Zusätzlich ist dem Verbindungsmittel 36 bzw. dem Zapfen 38 ein Befestigungsmittel 42 zugeordnet, welches durch eine Mutter 44 oder dergleichen ausgebildet ist. Das Befestigungsmittel 42, insbesondere die Mutter 44, dient dazu, die zumindest zwei Verbindungselemente 34, 34' in einer der zwei Endlagen festzusetzen bzw. zu fixieren.

Sofern daher das zumindest eine Verbindungsmittel 36, insbesondere der Zapfen 38, lose in die Aufnahmen 40, 40' eingesetzt oder mittels des Befestigungsmittels 42 lediglich leicht angezogen ist, kann der zweite Abschnitt 30 gegenüber dem ersten Abschnitt 28 zwischen den beiden Endlagen, insbesondere zwischen der ersten und zweiten Endlage, verschwenkt werden.

Bei festgezogenem Befestigungsmittel 42 ist eine Verschwenkbarkeit des zweiten Abschnitts 30 gegenüber dem ersten Abschnitt 28 nicht mehr möglich, und der zweite Abschnitt 30 kann wahlweise in der ersten Endlage (vgl. Figur 2A und 3A) oder in der zweiten Endlage (vgl. Fig. 2C, 2D und 3B) festgesetzt werden.

Wie es auch deutlich aus den Figuren 3 hervorgeht, weisen die zumindest zwei Verbindungselemente 34, 34' jeweils Berührungs- und/oder Kontaktflächen 46, 46' auf. Die Berührungs- und/oder Kontaktflächen 46, 46' sind zumindest weitgehend plan ausgebildet. Bei den Berührungs- und/oder Kontaktflächen 46, 46' handelt es sich insbesondere um diejenigen Flächen der zumindest zwei Verbindungselemente 34, 34', welche zueinander gewandt liegen und/oder zueinander gewandt angeordnet sind.

Sowohl in der ersten Endlage (vgl. Figur 2A und 3A) als auch in der zweiten Endlage (vgl. Fig. 2C, 2D und 3B) sind die Berührungs- und/oder Kontaktflächen 46, 46' parallel zueinander ausgebildet. Zudem stehen die zumindest zwei Verbindungselemente 34, 34' über deren Berührungs- und/oder Kontaktflächen 46, 46' in Oberflächenkontakt. Insbesondere sind die zumindest zwei Verbindungselemente 34, 34' formschlüssig miteinander verbunden. Hierfür umfassen die Berührungs- und/oder Kontaktflächen 46, 46' der zumindest zwei Verbindungselemente 34, 34' zumindest zwei Koppel- und/oder Rastverbindungen. Die zumindest zwei Koppel- und/oder Rastverbindungen greifen ineinander, sofern der zweite Abschnitt 30 des jeweiligen Stützfußes 22, 22' eine der beiden Endlagen eingenommen hat.

Insbesondere weist das weitere Verbindungselement 34' des zweiten Abschnitts 30 des jeweiligen Stützfußes 22 auf seiner Berührungs- und/oder Kontaktfläche 46' zumindest zwei Koppel- und/oder Rastelemente 48, 48' auf. Die zumindest zwei Koppel- und/oder Rastelemente 48, 48' bilden Erhebungen gegenüber der Berührungs- und/oder Kontaktfläche 46' des weiteren Verbindungselements 34' des zweiten Abschnitts 30 aus.

Die zumindest zwei Koppel- und/oder Rastelemente 48, 48' sind insbesondere durch einen ersten Steg 50 und einen zweiten Steg 50' gebildet. Der erste Steg 50 und der zweite Steg 52 sind beabstandet und insbesondere parallel zueinander auf der Berührungs- und/oder Kontaktfläche 46' des weiteren Verbindungselements 34' des zweiten Abschnitts 30 des jeweiligen Stützfußes 22 angeordnet.

Die zumindest zwei Koppel- und/oder Rastelemente 48, 48' greifen jeweils in korrespondierende Aussparungen 54, 54', welche auf der Berührungs- und/oder Kontaktfläche 46 des zumindest einen Verbindungselements 34 vorgesehen sind. Die Aussparungen 54, 54' können insbesondere in eine erste Aussparung 54 und in eine zweite Aussparung 54' unterteilt werden. Die Aussparungen 54, 54' sind derart ausgebildet, dass die zumindest zwei Koppel- und/oder Rastelemente 48, 48' vollständig in den beiden Endlagen des zweiten Abschnitts 30 des jeweiligen Stützfußes 22 aufgenommen werden können, d.h. gemäß vorliegendem Ausführungsbeispiel sind die Aussparungen 54, 54' als Nuten 60, 60' ausgebildet, die in der Berührungs- und/oder Kontaktfläche 46 des zumindest einen Verbindungselements 34 vorgesehen und/oder integriert sind.

In einer ersten Endlage (vgl. Figuren 2A und 3A) des zweiten Abschnitts 30 greift der erste Steg 50 auf der Berührungs- und/oder Kontaktfläche 46' des weiteren Verbindungselements 34' in die erste Aussparung 54 ein, die auf der Berührungs- und/oder Kontaktfläche 46 des zumindest einen Verbindungselements 34 vorgesehen ist, während der zweite Steg 52 auf der Berührungs- und/oder Kontaktfläche 46' des weiteren Verbindungselements 34' in die zweite Aussparung 54' auf der Berührungs- und/oder Kontaktfläche 46 des zumindest einen Verbindungselements 34 eingreift.

In einer zweiten Endlage (vgl. Figuren 2C, 2D und 3B) greift der erste Steg 50 auf der Berührungs- und/oder Kontaktfläche 46' des weiteren Verbindungselements 34' in die zweite Aussparung 54' ein, welche auf der Berührungs- und/oder Kontaktfläche 46 des zumindest einen Verbindungselements 34 vorgesehen ist; während der zweite Steg 52 auf der Berührungs- und/oder Kontaktfläche 46' des weiteren Verbindungselements 34' in die erste Aussparung 54 auf der Berührungs- und/oder Kontaktfläche 46 des zumindest einen Verbindungselements 34 eingreift.

Insbesondere wird deutlich, dass die zumindest zwei Koppel- und/oder Rastelemente 48, 48' und die jeweils korrespondierenden Aussparungen 54, 54' auf den jeweiligen Berührungs- und/oder Kontaktflächen 46, 46' der Verbindungselemente 34, 34'korrespondierend zueinander ausgebildet sind. Nur dann kann gewährleistet werden, dass die zumindest zwei Koppel- und/oder Rastelemente 48, 48' sowohl in der ersten Endlage als auch in der zweiten Endlage des zweiten Abschnitts 30 in die jeweiligen Aussparungen 54, 54' insbesondere formschlüssig eingreifen.

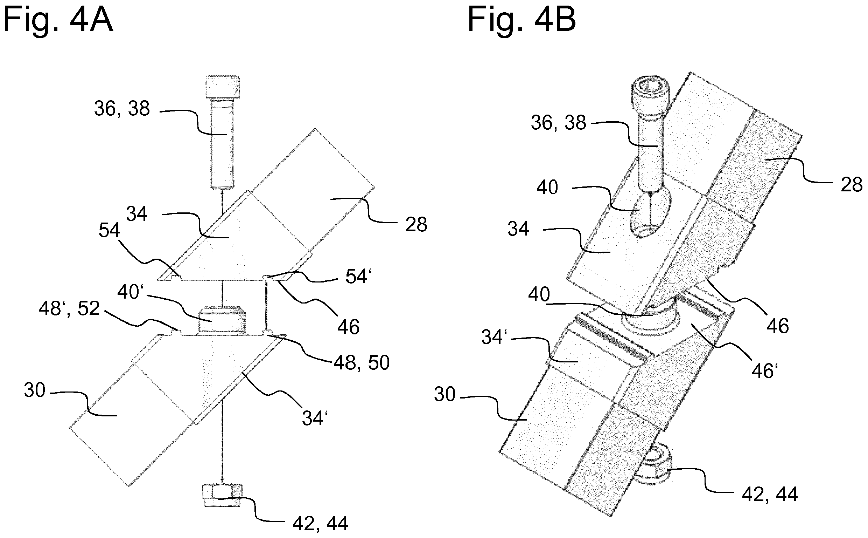

In den Figuren 4A ist in verschiedenen Explosionsdarstellungen die zweite Endlage des Stützfußes 22, insbesondere des zweiten Abschnitts 30, gegenüber dem ersten Abschnitt 28 abgebildet. An dieser Stelle sei insbesondere darauf hinzuweisen, dass die jeweils vorangegangen Erläuterungen zu den Figuren 1 bis 3C auch bei den vorliegenden Figuren 4 gelten und/oder umfasst sein sollen.

Aus den Figuren 4 wird nochmals besonders deutlich, dass die zumindest zwei Abschnitte 28, 30, insbesondere die zumindest zwei Verbindungselemente 34, 34' über zumindest ein Verbindungsmittel 36 in Form eines Zapfens 38 drehbar und/oder verschwenkbar gekoppelt sind. Der Zapfen 38 ist jeweils in Aufnahmen 40, 40' eingesetzt, welche Aufnahmen 40, 40' durch die zumindest zwei Verbindungselemente 34, 34' bereitgestellt werden. Die Aufnahmen 40, 40' sind korrespondierend zum Querschnitt des zumindest einen Verbindungsmittels 36 ausgebildet.

Zur Fixierung der jeweiligen Endlage des zweiten Abschnitts 30 ist dem Zapfen 38 ein Befestigungsmittel bspw. in Form einer Mutter zugeordnet.

Insbesondere werden in den Figuren 4 auch nochmals die Berührungs- und/oder Kontaktflächen 46, 46' der zumindest zwei Verbindungselemente 34, 34' deutlich, wobei es sich bei den Berührungs- und/oder Kontaktflächen 46, 46' um diejenigen Flächen der zumindest zwei Verbindungselemente 34, 34' handelt, welche zueinander gewandt liegen und/oder zueinander gewandt angeordnet sind. Die Berührungs- und/oder Kontaktflächen 46, 46' sind zumindest weitgehend parallel zueinander ausgebildet.

Über die Berührungs- und/oder Kontaktflächen 46, 46' stehen die zumindest zwei Verbindungselemente 34, 34' in der ersten und in der zweiten Endlage des zweiten Abschnitts 30 in Oberflächenkontakt. Insbesondere sind die zumindest zwei Verbindungselemente 34, 34' über die Berührungs- und/oder Kontaktflächen 46, 46' in den zwei Endlagen formschlüssig miteinander verbunden.

Hierzu umfassen die Berührungs- und/oder Kontaktflächen 46, 46' der zumindest zwei Verbindungselemente 34, 34' zumindest zwei Koppel- und/oder Rastverbindungen. Die zumindest zwei Koppel- und/oder Rastverbindungen greifen dann ineinander, sofern der zweite Abschnitt 30 des jeweiligen Stützfußes 22 eine der beiden Endlagen eingenommen hat.

Insbesondere weist das weitere Verbindungselement 34' des zweiten Abschnitts 30 des jeweiligen Stützfußes 22 auf seiner Berührungs- und/oder Kontaktfläche 46' zumindest zwei Koppel- und/oder Rastelemente 48, 48' auf. Die zumindest zwei Koppel- und/oder Rastelemente 48, 48' bilden Erhebungen gegenüber der Berührungs- und/oder Kontaktfläche 46' des weiteren Verbindungselements 34' des zweiten Abschnitts 30 aus und sind durch parallel zueinander angeordnete Stege 50, 52, insbesondere durch einen ersten Steg 50 und durch einen zweiten Steg 52, gebildet.

Die zumindest zwei Koppel- und/oder Rastelemente 48, 48' greifen jeweils in korrespondierende Aussparungen 54, 54' ein, welche auf der Berührungs- und/oder Kontaktfläche 46 des zumindest einen Verbindungselements 34 des ersten Abschnitts 28 vorgesehen sind. Die Aussparungen 54, 54' sind derart ausgebildet, dass die zumindest zwei Koppel- und/oder Rastelemente 48, 48' in beiden Endlagen des zweiten Abschnitts 30 aufgenommen können; d.h. gemäß vorliegendem Ausführungsbeispiel sind die Aussparungen 54, 54' als Nuten 60, 60' ausgebildet, die in der Berührungs- und/oder Kontaktfläche 46 des zumindest einen Verbindungselements 34 vorgesehen sind. Die Nuten 60, 60' können die jeweils die Stege 50, 52 vollständig aufnehmen, sofern der zweite Abschnitt 30 eine der beiden Endlagen eingenommen und/oder erreicht hat.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Transport- und/oder Förderstrecke und/oder der Stützfüße oder anderer gezeichneter Elemente in irgendeiner Weise in seinem Verständnis beeinträchtigt wäre.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Transportstrecke, Förderstrecke, Transport- und/oder Förderstrecke
- 12: Horizontalfördereinrichtung
- 14: Artikel
- 16: Getränkebehälter, Flaschen
- 18: Förderfläche
- 20: Förderband
- 22: Stützfuß
- 22': Stützfuß
- 24: Zwischenrahmen
- 26: Abstützelement
- 28: erster Abschnitt des Stützfußes
- 30: zweiter Abschnitt des Stützfußes
- 32: Verbindungseinheit
- 34: Verbindungselement
- 34': weiteres Verbindungselement
- 36: Verbindungsmittel
- 38: Zapfen
- 40: Aufnahme
- 40': Aufnahme
- 42: Befestigungsmittel
- 44: Mutter
- 46: Berührungs- und/oder Kontaktfläche
- 46': Berührungs- und/oder Kontaktfläche
- 48: Koppel- und/oder Rastelement
- 48': Koppel- und/oder Rastelement
- 50: erster Steg
- 52: zweiter Steg
- 54: erste Aussparung
- 54': zweite Aussparung
- 56: erste Verbindungsstrebe
- 56': zweite Verbindungsstrebe
- 58: Bodenplattform
- 60: Nut
- 60': Nut
- T: Transportrichtung

## Patentansprüche

1. Transport- und/oder Förderstrecke (10) zum Fortbewegen von Artikeln von und/oder zu und/oder zwischen Verarbeitungsmaschinen, insbesondere Verpackungsmaschinen und/oder Abfüllmaschinen und/oder Palettieranlagen oder dergleichen Maschinen, umfassend
- eine Förderfläche (18) zum Transport von Artikeln (14) und/oder Gruppen von Artikeln (14),
- zumindest zwei aus zumindest zwei Abschnitten gebildete Stützfüße (22, 22'), welche zum Tragen der Förderfläche (18) ausgebildet sind,
- wobei die zumindest zwei Abschnitte (28, 30) der jeweiligen Stützfüße (22, 22') mittels einer Verbindungseinheit (32) gekoppelt sind,
- wobei die Verbindungseinheit (32) zumindest zwei Verbindungselemente (34, 34') umfasst, wobei jeweils ein Verbindungselement einem Abschnitt der zumindest zwei Abschnitte (28, 30) zugeordnet ist, und
- wobei zumindest ein zweiter Abschnitt (30) gegenüber dem ersten Abschnitt (28) zwischen zwei Endlagen verschwenkbar ausgebildet ist,
- **dadurch gekennzeichnet, dass** der zweite Abschnitt (30) gegenüber dem ersten Anschnitt (28) der zumindest zwei Stützfüße (22, 22') um circa 180° verschwenkbar ausgebildet ist.

2. Transport- und/oder Förderstrecke nach Anspruch 1, bei welcher jeweils ein erster Abschnitt (28) der zumindest zwei Abschnitte der zumindest zwei Stützfüße (22, 22') gegenüber der Förderfläche (18) unverschwenkbar ausgebildet ist und/oder bei welcher der erste Abschnitt (28) der Förderfläche (18) starr zugeordnet ist.

3. Transport- und/oder Förderstrecke nach einem der vorherigen Ansprüche, bei welcher in einer ersten Endlage jeweils der zweite Abschnitt (30) gegenüber dem ersten Abschnitt (28) der zumindest zwei Stützfüße (22, 22') rechtwinkelig angeordnet ist.

4. Transport- und/oder Förderstrecke nach einem der vorherigen Ansprüche, bei welcher in einer zweiten Endlage der erste Abschnitt (28) und der zweite Abschnitt (30) in einer Ebene liegen.

5. Transport- und/oder Förderstrecke nach einem der vorherigen Ansprüche, bei welcher die zumindest zwei Verbindungselemente (34, 34') über zumindest ein Verbindungmittel (36) miteinander gekoppelt sind und/oder koppelbar sind.

6. Transport- und/oder Förderstrecke nach Anspruch 5, bei welcher die zumindest zwei Verbindungselemente (34, 34') jeweils eine Aufnahme (40, 40') umfassen und/oder bereitstellen, in welche Aufnahmen (40, 40') jeweils das zumindest eine Verbindungsmittel (36) zur Koppelung der zumindest zwei Verbindungselemente (34, 34') einsetzbar ist.

7. Transport- und/oder Förderstrecke nach einem der vorherigen Ansprüche, bei welcher die zumindest zwei Verbindungselemente (34, 34') Berührungs- und/oder Kontaktflächen (46, 46') aufweisen.

8. Transport- und/oder Förderstrecke nach Anspruch 7, bei welcher die Berührungs- und/oder Kontaktflächen (46, 46') der zumindest zwei Verbindungselemente (34, 34') in beiden Endlagen des zweiten Abschnitts (30) zumindest näherungsweise parallel zueinander angeordnet sind.

9. Transport- und/oder Förderstrecke nach Anspruch 7 oder 8, bei welcher die zumindest zwei Verbindungselemente (34, 34'), insbesondere dessen Berührungs- und/oder Kontaktflächen (46, 46') in beiden Endlagen des zweiten Abschnitts (30) über Koppel- und/oder Rastverbindungen miteinander in Oberflächenkontakt stehen und/oder formschlüssig verbunden sind.

10. Transport- und/oder Förderstrecke nach einem der Ansprüche 7 bis 9, bei welcher in der Berührungs- und/oder Kontaktfläche (46) des zumindest einen Verbindungselements (34) Aussparungen (54, 54') vorgesehen und/oder angeordnet sind, in welche je nach Endlage des zweiten Abschnitts (30) zumindest ein Koppel- und/oder Rastelement (48) eingreift, welches auf der Berührungs- und/oder Kontaktfläche (46') des weiteren Verbindungselements (34') vorgesehen und/oder angeordnet ist.

11. Transport- und/oder Förderstrecke nach Anspruch 10, bei welcher in einer ersten Endlage das zumindest eine Koppel- und/oder Rastelement (48) der Berührungs- und/oder Kontaktfläche (46') des weiteren Verbindungselements (34') in eine erste Aussparung (54) der Berührungs- und/oder Kontaktfläche (46) des zumindest einen Verbindungselements (34) eingreift.

12. Transport- und/oder Förderstrecke nach Anspruch 9 oder 11, bei welcher in einer zweiten Endlage das zumindest eine Koppel- und/oder Rastelement (48) der Berührungs- und/oder Kontaktfläche (46') des weiteren Verbindungselements (34') in eine zweite Aussparung (54') der Berührungs- und/oder Kontaktfläche (46) des zumindest einen Verbindungselements (34) eingreift.

13. Transport- und/oder Förderstrecke nach einem der vorherigen Ansprüche, bei welcher die zumindest zwei Stützfüße (22, 22') über wenigstens zwei Verbindungsstreben (56, 56') miteinander koppelbar sind und/oder gekoppelt sind.

14. Verfahren zum Aufstellen und/oder Abbau einer Transport- und/oder Förderstrecke (10) zum Fortbewegen von Artikeln von und/oder zu und/oder zwischen Verarbeitungsmaschinen, insbesondere Verpackungsmaschinen und/oder Abfüllmaschinen und/oder Palettieranlagen oder dergleichen Maschinen, umfassend die folgenden Schritte:
- Bereitstellen einer Förderfläche (18) zum Transport von Artikeln (14), sowie
- Bereitstellen zumindest zwei aus zumindest zwei Abschnitten (28, 30) gebildete Stützfüße (22, 22'), welche die Förderfläche (18) tragen, wobei die zumindest zwei Abschnitte (28, 30) der jeweiligen Stützfüße (22, 22') mittels einer Verbindungseinheit (32) gekoppelt sind, und wobei die Verbindungseinheit (32) zumindest zwei Verbindungselemente (34, 34') umfasst, wobei jeweils ein Verbindungselement einem Abschnitt der zumindest zwei Abschnitte (28, 30) zugeordnet ist, und
- wobei vorgesehen ist, dass zumindest ein zweiter Abschnitt (30) gegenüber dem ersten Abschnitt (28) zwischen zwei Endlagen verschwenkt wird,
- **dadurch gekennzeichnet, dass** der zweite Abschnitt (30) zum Erreichen einer der zwei Endlagen gegenüber dem ersten Abschnitt (28) der jeweiligen Stützfüße (22, 22') um circa 180° verschwenkt wird.

15. Verfahren nach Anspruch 14 zum Aufstellen und/oder Abbau einer Transport- und/oder Förderstrecke (10), welche gemäß einem der Ansprüche 1 bis 13 ausgebildet ist.

## Claims

1. A transport line and/or conveyor line (10) for moving along articles from and/or to and/or between processing machines, in particular, packaging machines and/or filling machines and/or palletising facilities or the like machines, the transport line and/or conveyor line (10) comprising
- a conveyor surface (18) for the transport of articles (14) and/or groups of articles (14),
- at least two support legs (22, 22') formed of at least two sections, which support legs (22, 22') are designed to support the conveyor surface (18),
- wherein the at least two sections (28, 30) of each of the support legs (22, 22') are coupled by a connection unit (32),
- wherein the connection unit (32) comprises at least two connection elements (34, 34'), wherein in each instance one connection element is assigned to one section of the at least two sections (28, 30), and
- wherein at least one second section (30) is designed to be swivelable relative to the first section (28) between two end positions,
- **characterised in that**, the second section (30) is designed to be swivelable by approximately 180° relative to the first section (28) of the at least two support legs (22, 22').

2. The transport line and/or conveyor line according to claim 1, in which in each instance one first section (28) of the at least two sections of the at least two support legs (22, 22') is designed to be non-swivelable relative to the conveyor surface (18), and/or in which the first section (28) is rigidly assigned to the conveyor surface (18).

3. The transport line and/or conveyor line according to one of the previous claims, in which, in a first end position, the second section (30) is in each instance arranged at a right angle to the first section (28) of the at least two support legs (22, 22').

4. The transport line and/or conveyor line according to one of the previous claims, in which, in a second end position, the first section (28) and the second section (30) are on one plane.

5. The transport line and/or conveyor line according to one of the previous claims, in which the at least two connection elements (34, 34') are coupled and/or coupleable to each other via at least one connection means (36).

6. The transport line and/or conveyor line according to claim 5, in which the at least two connection elements (34, 34') each comprise and/or provide a receptacle (40, 40'), into each of which receptacles (40, 40') the at least one connection means (36) is insertable in order to couple the at least two connection elements (34, 34').

7. The transport line and/or conveyor line according to one of the previous claims, in which the at least two connection elements (34, 34') have touching surfaces and/or contact surfaces (46, 46').

8. The transport line and/or conveyor line according to claim 7, in which, in both end positions of the second section (30), the touching surfaces and/or contact surfaces (46, 46') of the at least two connection elements (34, 34') are arranged to be at least approximately parallel to each other.

9. The transport line and/or conveyor line according to claim 7 or 8, in which, in both end positions of the second section (30), the at least two connection elements (34, 34'), in particular, the touching surfaces and/or contact surfaces (46, 46') thereof, are in surface contact with each other and/or connected to each other in a form-fitting manner via coupling connections and/or latching connections.

10. The transport line and/or conveyor line according to one of the claims 7 to 9, in which recesses (54, 54') are provided and/or arranged in the touching surface and/or contact surface (46) of the at least one connection element (34), into which recesses (54, 54') at least one coupling element and/or latching element (48) engages according to the particular end position of the second section (30), which coupling element and/or latching element (48) is provided and/or arranged on the touching surface and/or contact surface (46') of the further connection element (34').

11. The transport line and/or conveyor line according to claim 10, in which, in a first end position, the at least one coupling element and/or latching element (48) of the touching surface and/or contact surface (46') of the further connection element (34') engages into a first recess (54) of the touching surface and/or contact surface (46) of the at least one connection element (34).

12. The transport line and/or conveyor line according to claim 9 or 11, in which, in a second end position, the at least one coupling element and/or latching element (48) of the touching surface and/or contact surface (46') of the further connection element (34') engages into a second recess (54') of the touching surface and/or contact surface (46) of the at least one connection element (34).

13. The transport line and/or conveyor line according to one of the previous claims, in which the at least two support legs (22, 22') are coupleable and/or coupled to each other via at least two connecting rods (56, 56').

14. A method for the assembly and/or disassembly of a transport line and/or conveyor line (10) for moving along articles from and/or to and/or between processing machines, in particular, packaging machines and/or filling machines and/or palletising facilities or the like machines, the method comprising the following steps:
- provision of a conveyor surface (18) for the transport of articles (14), as well as
- provision of at least two support legs (22, 22') formed of at least two sections (28, 30), which support legs (22, 22') support the conveyor surface (18), wherein the at least two sections (28, 30) of each of the support legs (22, 22') are coupled by a connection unit (32), and wherein the connection unit (32) comprises at least two connection elements (34, 34'), wherein in each instance one connection element is assigned to one section of the at least two sections (28, 30), and
- wherein it is provided that at least one second section (30) is swivelable relative to the first section (28) between two end positions,
- **characterised in that**, the second section (30) is swivelled by approximately 180° relative to the first section (28) of the particular support legs (22, 22') in order to reach one of the two end positions.

15. The method according to claim 14 for the assembly and/or disassembly of a transport line and/or conveyor line (10) that is configured according to one of the claims 1 to 13.

## Revendications

1. Trajet de transport et/ou de convoyage (10) destiné à déplacer des articles depuis et/ou vers et/ou entre des machines de traitement, en particulier des machines d'emballage et/ou des machines de remplissage et/ou des installations de palettisation ou des machines similaires, comprenant
- une surface de convoyage (18) destinée à transporter des articles (14) et/ou des groupes d'articles (14),
- au moins deux pieds de support (22, 22') qui sont formés par au moins deux sections et sont conçus pour supporter la surface de convoyage (18),
- dans lequel lesdites au moins deux sections (28, 30) des pieds de support (22, 22') respectifs sont couplées au moyen d'une unité de liaison (32),
- dans lequel l'unité de liaison (32) comprend au moins deux éléments de liaison (34, 34'), dans lequel respectivement un élément de liaison est associé à une section desdites au moins deux sections (28, 30), et
- dans lequel au moins une deuxième section (30) est conçue de manière à pouvoir pivoter par rapport à la première section (28) entre deux positions extrêmes,
- **caractérisé par le fait que** la deuxième section (30) est conçue de manière à pouvoir pivoter de 180° à peu près par rapport à la première section (28) desdits au moins deux pieds de support (22, 22').

2. Trajet de transport et/ou de convoyage selon la revendication 1, dans lequel respectivement une première section (28) desdites au moins deux sections desdits au moins deux pieds de support (22, 22') est conçue de manière à ne pas pouvoir pivoter par rapport à la surface de convoyage (18) et/ou dans lequel la première section (28) est associée de manière rigide à la surface de convoyage (18).

3. Trajet de transport et/ou de convoyage selon l'une quelconque des revendications précédentes, dans lequel, dans une première position extrême, respectivement la deuxième section (30) est disposée à angle droit par rapport à la première section (28) desdits au moins deux pieds de support (22, 22').

4. Trajet de transport et/ou de convoyage selon l'une quelconque des revendications précédentes, dans lequel, dans une deuxième position extrême, la première section (28) et la deuxième section (30) se situent dans un plan.

5. Trajet de transport et/ou de convoyage selon l'une quelconque des revendications précédentes, dans lequel lesdits au moins deux éléments de liaison (34, 34') sont couplés et/ou peuvent être couplés entre eux par le biais d'au moins un moyen de liaison (36).

6. Trajet de transport et/ou de convoyage selon la revendication 5, dans lequel lesdits au moins deux éléments de liaison (34, 34') comprennent et/ou prévoient chacun un logement (40, 40'), dans lesquels logements (40, 40') peut être inséré ledit au moins un moyen de liaison (36) pour coupler lesdits au moins deux éléments de liaison (34, 34').

7. Trajet de transport et/ou de convoyage selon l'une quelconque des revendications précédentes, dans lequel lesdits au moins deux éléments de liaison (34, 34') présentent des surfaces d'attouchement et/ou de contact (46, 46').

8. Trajet de transport et/ou de convoyage selon la revendication 7, dans lequel les surfaces d'attouchement et/ou de contact (46, 46') desdits au moins deux éléments de liaison (34, 34') sont disposées au moins approximativement de manière parallèle entre elles dans les deux positions extrêmes de la deuxième section (30).

9. Trajet de transport et/ou de convoyage selon la revendication 7 ou 8, dans lequel lesdits au moins deux éléments de liaison (34, 34'), en particulier les surfaces d'attouchement et/ou de contact (46, 46') de ceux-ci, sont en contact de surface l'un avec l'autre et/ou sont reliés entre eux à engagement positif par l'intermédiaire de liaisons de couplage et/ou d'encliquetage dans les deux positions extrêmes de la deuxième section (30).

10. Trajet de transport et/ou de convoyage selon l'une quelconque des revendications 7 à 9, dans lequel des évidements (54, 54') sont prévus et/ou agencés dans la surface d'attouchement et/ou de contact (46) dudit au moins un élément de liaison (34), dans lequel, selon la position extrême de la deuxième section (30), s'engage au moins un élément de couplage et/ou d'encliquetage (48) qui est prévu et/ou disposé sur la surface d'attouchement et/ou de contact (46') de l'autre élément de liaison (34').

11. Trajet de transport et/ou de convoyage selon la revendication 10, dans lequel, dans une première position extrême, ledit au moins un élément de couplage et/ou d'encliquetage (48) de la surface d'attouchement et/ou de contact (46') de l'autre élément de liaison (34') s'engage dans un premier évidement (54) de la surface d'attouchement et/ou de contact (46) dudit au moins un élément de liaison (34).

12. Trajet de transport et/ou de convoyage selon la revendication 9 ou 11, dans lequel, dans une deuxième position extrême, ledit au moins un élément de couplage et/ou d'encliquetage (48) de la surface d'attouchement et/ou de contact (46') de l'autre élément de liaison (34') s'engage dans un deuxième évidement (54') de la surface d'attouchement et/ou de contact (46) dudit au moins un élément de liaison (34).

13. Trajet de transport et/ou de convoyage selon l'une quelconque des revendications précédentes, dans lequel lesdits au moins deux pieds de support (22, 22') peuvent être couplés et/ou sont couplés l'un à l'autre par l'intermédiaire d'au moins deux entretoises de liaison (56, 56 ').

14. Procédé de montage et/ou de démontage d'un trajet de transport et/ou de convoyage (10) destiné à déplacer des articles depuis et/ou vers et/ou entre des machines de traitement, en particulier des machines d'emballage et/ou des machines de remplissage et/ou des installations de palettisation ou des machines similaires, comprenant les étapes suivantes consistant à:
- fournir une surface de convoyage (18) destinée à transporter des articles (14), ainsi que
- fournir au moins deux pieds de support (22, 22') qui sont formés par au moins deux sections (28, 30) et qui supportent la surface de convoyage (18), dans lequel lesdites au moins deux sections (28, 30) des pieds de support (22, 22') respectifs sont couplées au moyen d'une unité de liaison (32), et dans lequel l'unité de liaison (32) comprend au moins deux éléments de liaison (34, 34'), dans lequel un élément de liaison est associé à une section desdites au moins deux sections (28, 30), et
- dans lequel il est prévu qu'au moins une deuxième section (30) est pivotée par rapport à la première section (28) entre deux positions extrêmes,
- **caractérisé par le fait que**, pour atteindre l'une des deux positions extrêmes, la deuxième section (30) est pivotée de 180° à peu près par rapport à la première section (28) des pieds de support (22, 22') respectifs.

15. Procédé selon la revendication 14 de montage et/ou de démontage d'un trajet de transport et/ou de convoyage (10) qui est conçu selon l'une quelconque des revendications 1 à 13.
